Europäisches Patentamt

European Patent Office

Office européen des brevets

(11) Publication number: 0 326 228 A1

# EUROPEAN PATENT APPLICATION

(21) Application number: 89200170.2

(22) Date of filing: 26.01.89

(51) Int. Cl.⁴: F26B 23/02 , F23L 15/04

(30) Priority: 29.01.88 NL 8800226

(43) Date of publication of application:
02.08.89 Bulletin 89/31

(84) Designated Contracting States:
DE FR GB NL SE

(71) Applicant: STORK CONTIWEB B.V.
Wim de Körverstraat 43a
NL-5831 AN Boxmeer(NL)

(72) Inventor: Jacobs, Thomas Gerardus Maria
Merel 12
NL-5831 MS Boxmeer(NL)
Inventor: de Vroome, Clemens Johannes
Maria
Oeffeltseweg 21
NL-5835 BB Beugen(NL)

(74) Representative: Reynvaan, Lambertus
Johannes, Ir. et al
EXTERPATENT B.V. P.O. Box 90649
NL-2509 LP 's-Gravenhage(NL)

(54) Heating appliance.

(57) A heating appliance particularly for a drier of a web of material comprising a combustion unit having a burner (4) and a combustion chamber (6, 7, 8). The combustion chamber consists of an elongated first section (6) extending away from the burner and merging into a second portion (8) via a bend (7) of 180° said two portions defining an U-shaped path for the combustion gases and being approximately of equal lengths. The combustion chamber also being provided with one or more discharge openings (9) for discharging part of the combustion gases, said opening(s) being controllable by means of a valve (9).

## Heating appliance

The present invention relates to a heating appliance, particularly for a drier, comprising a combustion unit having a burner and a combustion chamber.

Such heating appliances are known and are generally used in combination with driers for a web of material in order to heat the atmosphere in said drier and to incinerate the solvent vapours in the exhaust gases. Said known heating appliances are very bulky and require complicated and expensive control and regulating devices.

It is also known to use heating appliances which have so called open burners. Although a good heat transfer is obtained said burners are often a source of soot by insufficiently burning of the solvent vapours. Moreover an additional incinerator has to be arranged for treatment of the exhaust gases.

It is an object of the present invention to provide a heating appliance which is as compact as possible and can be mounted in the drier as a single unit.

Another object of the invention is to provide a heating appliance, the combustion gases of which are clean enough to be discharged into the outside air without any subsequent treatment.

These objects are achieved according to the invention in that the combustion chamber consists of an elongated first portion, extending away from the burner and merging into an elongated second portion via a bend of 180°, said two portions defining an U-shaped path for the combustion gases and being approximately of equal lengths and in that said combustion chamber being provided with at least one discharge opening for discharging part of the combustion gases, said opening(s) being controllable by means of a valve.

The U-shaped configuration of the combustion chamber provides on the one hand a long residence time for the combustion gases which ensures that all harmful substances are burnt to such an extent that emission standards are met on discharging said flue gases as exhaust gases. On the other hand the heating of the atmosphere in the drier takes place directly by the combustion gases which are discharged via the discharge opening or openings.

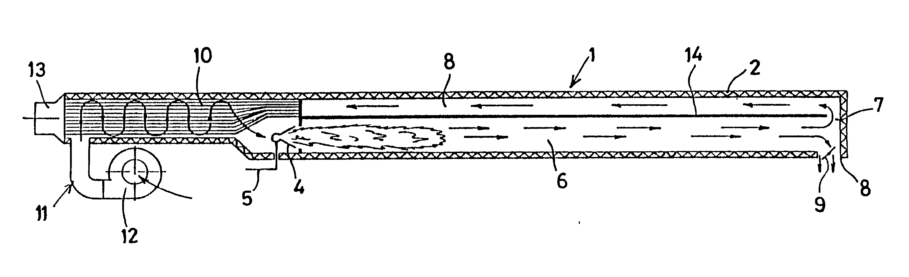

The invention will be explained in more detail with reference to the accompanying drawing, which shows a schematical sectional view of the heating appliance according to the invention.

The heating appliance 1 comprises an essentially closed housing 2 having an elongated configuration. Inside said housing a burner 4 is disposed having a fuel supply 5.

Also inside said housing a combustion chamber is defined consisting of a first elongated portion 6 merging via a bend 7 into a second elongated portion 8. Both parties define a U-shaped path for the combustion gases.

In the first portion of the combustion chamber near the bend 7 a discharge opening 8 is arranged, said opening being provided with a valve 9. If desired, more than one discharge opening may be arranged in any suitable location of the combustion chamber.

The second portion 8 of the combustion chamber is connected with a heat exchanger 10, through which also flows combustion air for the burner 4, which is supplied via air intake means 11 including a fan 12.

Via the heat exchanger 10 the second portion of the combustion chamber is in communication with an outlet 13 for discharging the combustion gases to the outside air.

As can be seen from the drawing the heating appliance has a very compact elongated configuration in which the heat exchanger 10 and the combustion chamber 6, 7, 8 are longitudinally aligned and enclosed in the single housing 2, which has for example a rectangular cross section, the heat exchanger 10 lying within the outer contours of the combustion chamber.

The compact arrangement of the heating appliance is also the consequence of the fact that the cross sectional area of the combustion chamber can be made smaller after the discharge opening(s) because the combustion gases throughput decreases. In the embodiment shown in the drawing the second portion 8 of the combustion chamber has a smaller cross sectional area. Since the mass of the combustion gases passing the heat exchanger is smaller said heat exchanger can also have a reduced volume.

The U-shaped path for the combustion gases within the combustion chamber provides a certain residence time for said combustion gases so that the combustion gases are maintained at a high temperature of approximately 700-800° C.

The residence time can be chosen by choosing a particular volume of the combustion chamber, while the temperature of the combustion gases can be controlled by controlling the fuel supply to the burner 4. Therefore all harmful substances and vapours are oxidized so that the combustion gases can be discharged without any subsequent treatment, by a suitable choice of a residence time-temperature combination.

Through the discharge opening 8 part of the combustion gases are discharged for heating purposes. The quantity of the discharged combustion gases is controlled by means of the valve 9.

In the shown embodiment the opening 8 is located in the first portion 6 near the bend 7. It will however be appreciated that said opening can be situated somewhere else for example in the second portion of the combustion chamber.

The U-shaped path within the combustion chamber is defined by a plate 14, which extends longitudinally in the combustion chamber and forms the two portions 6 and 8 of approximately the same length.

## Claims

1. A heating appliance, particularly for a drier, comprising a combustion unit having a burner (4) and a combustion chamber (6, 7, 8), characterized in that the combustion chamber (6, 7, 8) consists of an elongated first portion (6), extending away from the burner and merging into an elongated second portion (8) via a bend (7) of 180°, said two portions defining an U-shaped path for the combustion gases and being approximately of equal lengths and in that said combustion chamber being provided with at least one discharge opening (9) for discharging part of the combustion gases, said opening(s) being controllable by means of a valve (9).

2. A heating appliance according to claim 1, characterized in that one of the discharge openings is located at or near the bend.

3. A heating appliance according to claim 1, characterized in that one or more of the discharge opening(s) are located in the second portion of the combustion chamber.

4. A heating appliance according to the preceding claims 1-3, characterized in that the second portion (8) of the combustion chamber is via a heat exchanger (10) connected to an outlet (13), said heat exchanger also being in communication with combustion air intake means (11).

5. A heating appliance according to claim 4, characterized in that the heat exchanger is disposed in longitudinal alignment with the combustion chamber and lies within the outer contours of said combustion chamber.

6. A heating appliance according to the preceding claims 1-5, characterized in that the combustion chamber is formed by an elongated housing (2) having a rectangular cross section and the U-shaped path for the combustion gases if formed by a longitudinally extending plate (14) inside said housing.

EP 0 326 228 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 103 792 (GRANCO EQUIPMENT INC.) * Whole document * | 1-5 | F 26 B 23/02 F 23 L 15/04 |
| Y | FR-A-2 090 780 (UNIVERSAL OIL PRODUCTS CO.) * Whole document * | 1-5 | |
| A | WO-A-8 701 434 (KATEC BETZ GmbH & CO.) * Whole document * | 1,2,4,5 | |
| A | US-A-3 468 634 (PAULETTA) * Whole document * | 1,4,5 | |
| A | DE-A-1 922 949 (U.O.P. KAVAG) * Whole document * | 1,4,5 | |
| A | FR-A-2 248 470 (KATEC KATALYTISCHE LUFTTECHNIK BETZ & CO.) * Whole document * | 1,4,5 | |
| A | US-A-3 090 675 (RUFF et al.) * Whole document * | 1,6 | TECHNICAL FIELDS SEARCHED (Int. Cl.4) |
| A | EP-A-0 162 941 (MAG) | | F 26 B F 23 G |

The present search report has been drawn up for all claims

| Place of search | Date of completion of the search | Examiner |
|---|---|---|
| THE HAGUE | 19-04-1989 | SILVIS H. |